(19) **Europäisches Patentamt**

**European Patent Office**

**Office européen des brevets**

(11) **EP 0 600 312 B1**

(12) **EUROPÄISCHE PATENTSCHRIFT**

(45) Veröffentlichungstag und Bekanntmachung des Hinweises auf die Patenterteilung:
**21.08.1996 Patentblatt 1996/34**

(51) Int Cl.$^6$: **H02M 7/48**

(21) Anmeldenummer: **93118573.0**

(22) Anmeldetag: **18.11.1993**

(54) **Verfahren zum Parallelschalten von Umrichtern anhand von Strom-Extremwerten**

Method of controlling parallel-connected inverters on the basis of current maximal values

Méthode de contrôle pour onduleurs en parallèle au vu des extrema de courant

(84) Benannte Vertragsstaaten:
**AT BE CH DE ES FR GB IT LI LU NL SE**

(30) Priorität: **03.12.1992 CH 3714/92**

(43) Veröffentlichungstag der Anmeldung:
**08.06.1994 Patentblatt 1994/23**

(73) Patentinhaber: **INVENTIO AG**
**CH-6052 Hergiswil NW (CH)**

(72) Erfinder: **Rohner, Ronald**
**CH-5400 Baden (CH)**

(56) Entgegenhaltungen:
**EP-A- 0 489 971**      **DE-C- 4 023 207**
**DE-C- 4 038 869**

## Beschreibung

Die Realisierung schneller Umrichter mit mehreren direkt parallelgeschalteten Einzelgeräten ist nur mit erheblichem Aufwand auf Seite der Steuer- und Regelelektronik möglich. Dieser ist nur dann vertretbar, wenn bestimmte Anforderungen an den Umrichter auf andere Weise nicht erfüllt werden können und bzw. oder eine Parallelschaltung entscheidende Vorteile gegenüber den herkömmlichen Lösungen mit einem Einzelgerät bietet.

Ein Entwicklungsziel heutiger Motorenbauer ist die Konstruktion immer schneller drehender Maschinen. Sogenannt "schnellaufende Antriebe" benötigen Betriebsfrequenzen von über 500 Hz. Bei der angestrebten Leistung von mehreren 100 kVA können herkömmliche Thyristor- oder GTO-(Gate Turn Off)-Umrichter diese Frequenzen allenfalls noch in Form einer Grundwellentaktung zur Verfügung stellen.

Die Nachteile dieser groben, rechteckförmigen Spannungseinprägung und der daraus resultierenden un-sinusförmigen Stromkurve sind in Form von zusätzlichen Verlusten und Drehmomentstössen hinreichend bekannt. Seit langem werden daher Verfahren angewendet, welche diese Spannungsblöcke zeitlich in kleine Einheiten unterteilen und so einen nahezu sinusförmigen Verlauf des Motorstromes ermöglichen. Für den Umrichter bedeutet dies, dass die Leistungsschalter entsprechend schneller ein- und ausgeschaltet werden müssen. Je schneller die Schalter sind, desto feiner kann die Unterteilung der Spannungsblöcke erfolgen und desto sinusförmiger wird auch der Motorstrom.

Wird nun die Betriebsfrequenz von den üblichen 50 bis 120 Hz auf über 500 Hz bei schnellaufenden Antrieben angehoben, so muss auch die Schaltfrequenz der Schalter entsprechend erhöht werden. Das heisst, die Thyristor- und GTO-Schalter kommen erst recht an die Grenze ihrer Schaltgeschwindigkeit.

Schnelle Umrichter mit Schaltfrequenzen bis zu 100 kHz, die eine sinusförmige Stromkurve auch bei 500 Hz Ausgangsfrequenz ermöglichen, gibt es serienmässig nur bis zu einer Leistungsklasse von ca. 50 kVA. Eine Leistungserhöhung auf mehrere 100 kVA bei gleichbleibend hoher Taktrate ist zum heutigen Zeitpunkt auf herkömmliche Weise kaum denkbar, daher der Wunsch nach parallelgeschalteten Umrichtern. Bei einer elektrischen Kopplung der von den einzelnen Umrichtern gelieferten Energie werden die einzelnen Phasen der Teilumrichter miteinander verbunden und die Last wie üblich angeschlossen. Es können die Teilumrichter entweder über grosse Anschlussdrosseln, welche eine systembedingte Funktion ausüben, oder über kleine, die nur Schutzfunktionen besitzen, miteinander verbunden werden. Im letzteren Fall wird von direkter Kopplung gesprochen.

Es ist bekannt, eine überlagerte Gesamtstromregelung vorzusehen, welche den Summenstrom $I_i$ aller einzelnen Teilumrichter einer Sollgrösse $I_s$ nachführt. Dazu werden die Ströme aller Teilumrichter gemessen und addiert. Es spielt für das Parallelschalten der Teilumrichter grundsätzlich keine Rolle, ob es sich beim Regelverfahren der überlagerten Gesamtstromregelung um eine PWM, eine Zweipunktregelung oder ein anderes Verfahren handelt.

Diese Gesamtstromregelung führt also den Iststrom dem Sollwert nach, indem sie entscheidet, ob alle Teilumrichter zusammen in Zukunft mehr oder weniger Strom liefern sollen, d.h., ob jeweils die entsprechenden "oberen" oder "unteren" Leistungsschalter in den einzelnen Teilumrichtern ein- bzw. ausgeschaltet sein sollen. Mit anderen Worten, die Teilumrichter werden synchronisiert, indem die Schaltzustände ihrer Leistungsschalter direkt durch de Gesamtstromregelung bestimmt wird.

Die Aufteilung des Gesamtstroms auf die einzelnen Teilumrichter erfolgt nach einer vorgegebenen Aufteilungsvorschrift, die überlicherweise die gleichen Ströme für alle Teilumrichter vorsehen wird.

Weil nun aber die einzelnen Teilumrichter sehr unterschiedliche Eigenschaften aufweisen können (z.B. unterschiedliche Innenwiderstände, bzw. Inneninduktivitäten infolge von Bauteiltoleranzen, Fertigungstoleranzen, unterschiedliche Umgebungsbedingungen etc.) ergeben sich Abweichungen von dieser Stromaufteilungsvorschrift. Aus diesem Grund wird eine unterlagerte Ausgleichsregelung eingesetzt, welche die vorgeschriebene Stromaufteilung zwischen den einzelnen Teilumrichtern sicherstellt.

Ein Beispiel einer solchen Ausgleichsregelung ist in Patent DE 4023207 C1 beschrieben. Dort werden die Ströme der einzelnen Teilumrichter geregelt, indem der Ein- und Ausschaltzeitpunkt jedes einzelnen Umrichters aufgrund der Differenz zwischen dem von ihm gelieferten Strom und dem seinem Soll-Anteil am Gesamtstrom entsprechenden Stromwert geregelt wird. Dadurch werden die Ströme der einzelnen Teilumrichter ihrem gemeinsamen Mittelwert nachgeführt und so ein breites Auseinanderlaufen der Ströme verhindert. Entscheidend bei einer vorschriftswidrigen Stromaufteilung ist jedoch nicht die Abweichung vom Mittelwert aller Ströme, sondern - beispielsweise bei einem Gleichstromsteller - bei abgeschalteten Leistungsschaltern die grösste Negativabweichung (Minimalwert) und bei eingeschalteten Leistungsschaltern die grösste positive Abweichung (Maximalwert).

DE-C- 4 038 869 beschreibt ein Verfahren zum Parallelschalten von Umrichtern, wobei die Ein - und Ausschaltzeiten der parallelgeschalteten Umrichter durch eine Steuerschaltung bestimmt werden, und wobei die erfaßten Stromwerte von jedem Umrichter zur besseren und schnelteren Stromsymmetrierung alle jeweils miteinander verglichen werden.

Die Erfindung gestattet es, diese extremen Abweichungen zu minimieren. Zu diesem Zweck ist sie wie im Anspruch 1 beschrieben definiert. Sie soll im folgenden anhand der Figuren näher erläutert werden.

Es zeigt :

Fig. 1 die Ströme dreier Teilumrichter bei fallenden Stromwerten,
Fig. 2 die Ströme dreier Teilumrichter bei steigenden Stromwerten,
Fig. 3 die Bestimmung von Schaltzeiten aufgrund von Verzögerungen gegenüber einem Referenzzeitpunkt,
Fig. 4 die Bestimmung von Schaltzeiten aufgrund von Strom-Gleichheiten,
Fig. 5 das auf eine Phase beschränkte Schema einer Anlage zur Durchführung des Verfahrens.

Die Beschreibung bezieht sich auf eine Umrichteranlage, welche aus mehreren parallelgeschalteten Teilumrichtern aufgebaut ist, wobei die entsprechenden einzelnen Phasen der Teilumrichter direkt galvanisch miteinander verbunden sind. Dabei ist zu bemerken, dass einfachheitshalber in den Figuren jeweils nur eine Phase dargestellt ist; die übrigen Phasen hat man sich in analoger Art und Weise zu denken. Insbesondere wenn von "entsprechenden Leistungsschaltern in den einzelnen Teilumrichtern" die Rede ist, sind damit die "oberen" bzw. "unteren" Leistungsschalter derselben Phase der einzelnen zusammengeschalteten Teilumrichter zu verstehen.

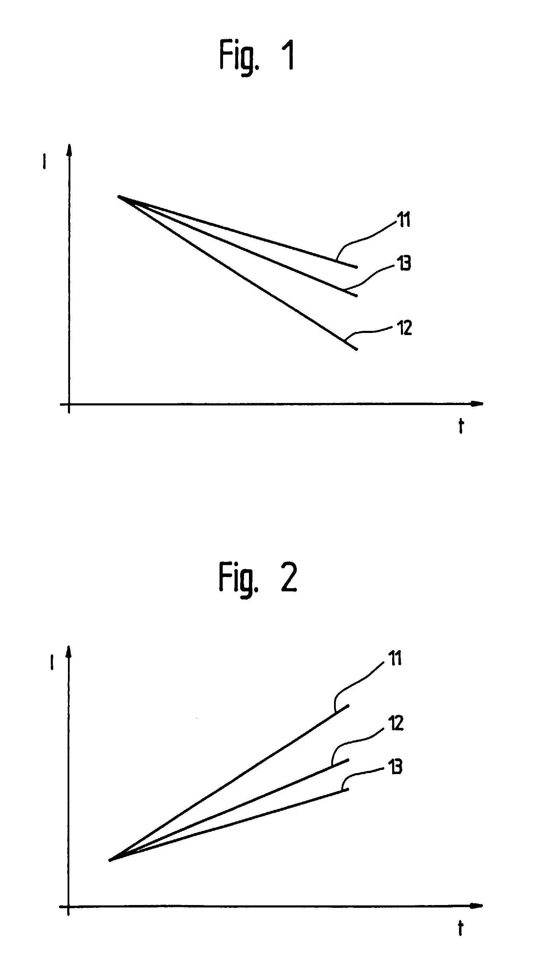

Wie schon erwähnt, besitzt die gesamte, aus mehreren parallelgeschalteten Teilumrichtern aufgebaute Anlage eine überlagerte Gesamtstromregelung, welche in bekannter Weise die Ist-Summe aller Ströme einem Sollwert nachführt und hier nicht weiter beschrieben wird. Es wird hier angenommen, dass die einzuhaltende Aufteilung des Gesamtstromes nach einer Vorschrift erfolgen soll, die für alle Teilumrichter gleiche Ströme vorsieht. Wegen der unvermeidlichen Unterschiede in den Eigenschaften verschiedener Teilumrichter liefern sie jedoch verschiedene Ströme, deren zeitlicher Verlauf bei ausgeschalteten Leistungsschaltern etwa wie in Figur 1, und bei eingeschalteten Leistungschaltern etwa wie in Figur 2 gezeigt aussehen können. In diesen Figuren bezeichnen $I_1$, $I_2$, $I_3$ die Ströme dreier Teilumrichter.

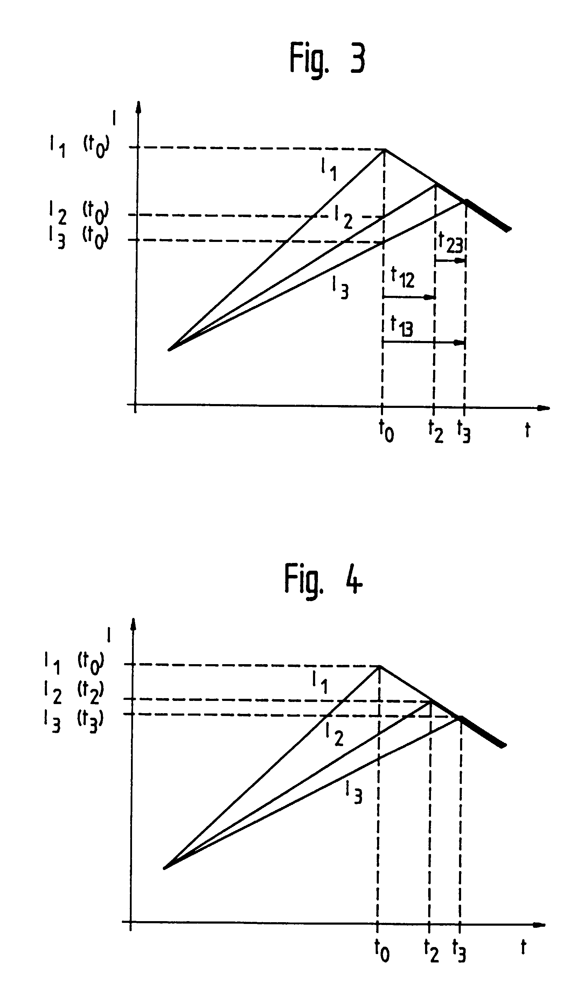

Figur 3 veranschaulicht eine Ausführungsform des erfindungsgemässen Verfahrens, und zwar bei steigendem Strom, in einer Anlage mit drei Teilumrichtern welche mit 1, 2 und 3 bezeichnet sind. Die Verhältnisse bei abnehmendem Strom sind durch einfaches Vorzeichenwechsel der zeitlichen Ableitung darstellbar. Bei den in Fig. 3 dargestellten Verhältnissen der Ströme $I_1$, $I_2$, $I_3$ in den drei Teilumrichtern wird nur der Umrichter "1", der den grössten Strom führt, aufgrund eines Vergleiches des gesamten Ist-Stromes mit dem entsprechenden Sollwert ausgeschaltet. Der Zeitpunkt $t_o$ in dem dies geschieht sei als Referenzzeitpunkt bezeichnet. Danach wird der den zweitgrössten Strom führende Umrichter "2" mit einer berechneten Verzögerung $t_{12}$ gegenüber $t_o$ ausgeschaltet, und schliesslich der Umrichter "3" mit einer Verzögerung $t_{13}$, ebenfalls gegenüber $t_o$. Die Einschaltvorgänge geschehen auf entsprechende Weise. Die Berechnung der Verzögerungen kann beispielsweise aufgrund der Formel

$$t_{ln} = [\, I_l\,(t_o) - I_n\,(t_o)\,]\cdot k,$$

(mit n = 2, 3) geschehen.

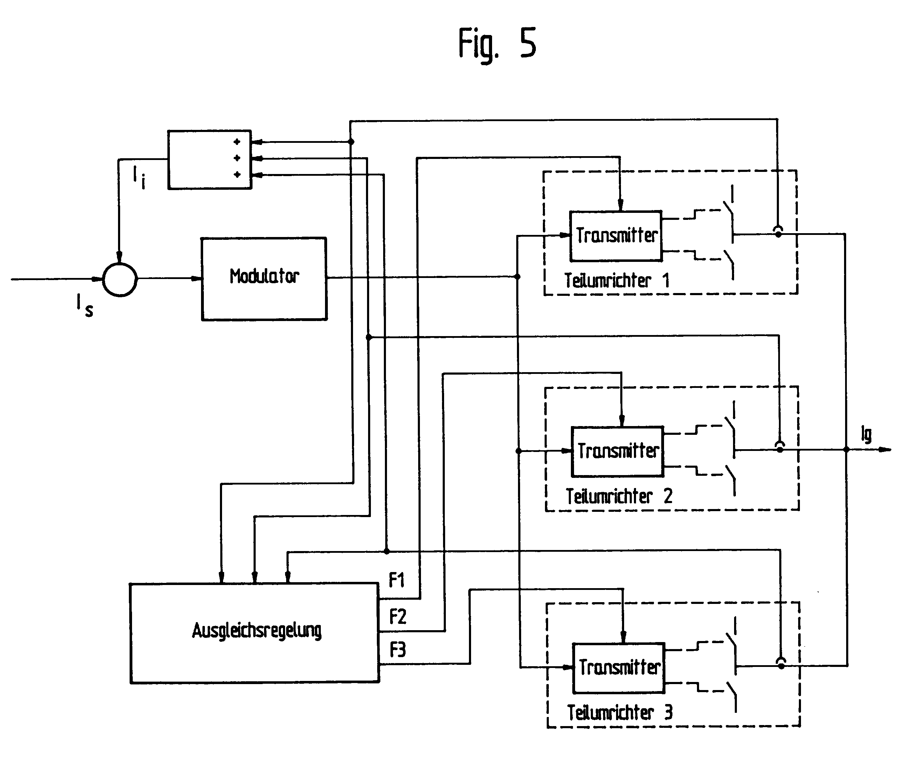

Dabei sind $I_2\,(t_o)$ und $I_3\,(t_o)$ die Ströme der Umrichter "2" und "3" in dem Augenblick, da der Umrichter "1" ausgeschaltet wird, und k ist ein Faktor der vom Innenwiderstand bzw. der inneren Induktivität der Teilumrichter, der Zwischenkreisspannung Uz sowie der Ungleichheit der Teilumrichter und den Einflüssen des Aufbaus der Anlage abhängt. Der Faktor k muss, da in der Regel nicht alle Einflussfaktoren genügend genau bekannt sind, empirisch so gross gewählt werden, dass die jeweiligen Verzögerungen $t_{1n}$ genügen, um den Stromausgleich herbeizuführen. In Figur 5 ist eine Realisierungsmöglichkeit dargestellt, wobei die Ausgleichsregelung entsprechende Freigabesignale $F_n$ an die Transmitter der Teilumrichter sendet, sobald die entsprechenden Verzögerungen abgelaufen sind.

Es ist jedoch auch möglich, ein Folgeprinzip anzuwenden, d.h. die Zeitverzögerung wird vom Teilumrichter mit dem extremen Wert, dann vom Teilumrichter mit dem zu diesem extremen Wert nächststehenden Wert ausgehend u.s.w. immer nur für den nächstfolgenden Teilumrichter berechnet. Dann werden im Beispiel der Figur 3 nicht die Verzögerungen $t_{12}$ und $t_{13}$, sondern die Verzögerungen $t_{12}$ und $t_{23}$ berechnet, und zwar jeweils aufgrund von Grössen die zur Zeit $t_o$, respektive zur Zeit $t_2$ erhältlich sind. Die Ausführung des Verfahrens bei mehr als drei in parallel geschalteten Umrichtern ergibt sich von selbst.

In einer weiteren Ausführungsform des Verfahrens erzwingt man den Ausgleich auf ganz radikale Art und Weise, indem durch eine entsprechende Steuerung der Schaltzeitpunkte innerhalb eines kleinen Bruchteils des Taktintervalls, die Ströme der Teilumrichter direkt auf das vorgeschriebene Verhältnis ihrer Aufteilungswerte gebracht werden. Dann wird zwar immer noch der jeweils den grössten (beziehungsweise kleinsten) Strom führende Umrichter geschaltet, doch wird der Schaltzeitpunkt jedes Umrichters ausser dem zuallererst geschalteten durch einen direkten Vergleich seines Stromes mit den Strömen der vorher geschalteten Umrichter bestimmt. In der Regel wird jeder Umrichter ausser dem ersten in dem Zeitpunkt geschaltet werden, in dem sein Strom zum Extremwert aller Umrichterströme wird; es sind aber auch Abweichungen von dieser Regel denkbar. So kann eine gewisse Verzögerung in Kauf genommen werden, oder es kann der Zeitpunkt gewählt werden, in dem der Strom des zu schaltenden Umrichters entweder denjenigen des unmittelbar vor ihm oder den des als erster geschalteten Umrichters übersteigt.

Figur 4 zeigt die entsprechenden Verhältnisse. Obwohl der Gesamtverlauf der Ströme gleich aussieht wie in Figur 3, und der den grössten Strom führende Umrichter "1" aufgrund eines globalen Sollwertes wiederum zuerst ausgeschaltet wird, werden die Schaltzeiten $t_2$ und $t_3$ der beiden anderen Umrichter auf andere Weise bestimmt. Es wird sowohl der zweite wie der dritte Umrichter dann ausgeschaltet, wenn ihr Strom zum Extremwert wird, d.h. im gezeigten Beispiel wenn er die Werte beider anderen Ströme überschreitet. Auch bei diesem Verfahren ist die übergeordnete Regelung dafür verantwortlich, dass bei dem nun sichergestellten Aufteilungsverhältnis der gewünschte Gesamtstrom eingestellt wird. Figur 4 zeigt dieses Verfahren für den Fall des Ausschaltvorganges der Leistungsschalter. Der Teilumrichter mit dem extremen Stromwert wird zuerst ausgeschaltet. Sobald der nun sinkende Strom gleich gross ist, wie der zu diesem extremen Wert nächststehende Strom $I_2$, wird auch dieser Leistungsschalter ausgeschaltet u.s.w. Der Einschaltvorgang verläuft in entsprechender Art und Weise.

Figur 5 zeigt das Schema einer Anlage zur Durchführung des erfindungsgemässen Verfahrens, wobei einfachheitshalber nur eine, aus drei parallel geschalteten Teil-Umrichtern bestehende Phase der Anlage gezeichnet ist. Bei der in Figur 5 dargestellten Realisierungsvariante besteht der Funktionsblock Ausgleichsregelung für diese Verfahren aus einem Rechenblock, welcher z.B. bei einem Ausschaltbefehl des Modulators alle Ist-Ströme der Teilumrichter kontinuierlich überwacht und die entsprechenden Freigabesignale $F_n$ erzeugt. Das heisst, unmittelbar auf den Ausschaltbefehl des Modulators wird das Freigabesignal für den Teilrichter mit dem extremen Ist-Strom gesendet. Dann wird z.B. bei letztgenanntem Verfahren solange gewartet, bis ein anderer Teilumrichter den extremen Ist-Strom aller Umrichter - inklusive des schon geschalteten - liefert, worauf auch dessen Freigabesignal $F_n$ ausgegeben wird und somit der Ausschaltbefehl des Modulators an die Leistungsschalter gelangt usw.

Die Regelung des Gesamtstromes basiert auf einem Soll-Ist-Stromwertvergleich ($I_s$ und $I_i$) mit anschliessender Pulsmustererzeugung im Modulator. Ob dieser Modulator eine klassische PWM-Modulation durchführt oder irgendeinanderes bekanntes Verfahren verwendet, hat für das hier beschriebene Parallelschaltungsverfahren keinen Einfluss. Ebenfalls nicht von Bedeutung ist, ob wie in der Figur 5 dargestellt der Gesamtstrom $I_i$ aufgrund einer Addition der einzelnen Ist-Ströme der Teilumrichter gebildet wird oder separat mit einem eigens dafür bestimmten Strommessglied gemessen wird. Die vom Modulator erzeugten Ein- und Ausschaltbefehle für die Leistungsschalter gelangen zu den einzelnen Teilumrichtern. D.h., alle Teilumrichter bekommen vom Modulator dieselben Schaltbefehle für die entsprechenden Leistungsschalter. Diese Schaltbefehle werden nun in jedem Teilumrichter im sogenannten Transmitter zwischengespeichert und erst dann an die Leistungsschalter weitergeführt, wenn die Ausgleichsregelung einen entsprechenden Freigabebefehl $F_n$ (mit n = 1, 2, 3) ausgibt. Die Erzeugung dieser Freigabefehle in der Ausgleichsregelung basiert auf einem der vorgängig beschriebenen Verfahren.

## Patentansprüche

1. Verfahren zum Parallelschalten von Umrichtern, insbesondere von Umrichtern mit Pulsmodulation deren Ausgänge direkt oder über Drosseln verbunden sind, wobei die Ein- und Ausschaltzeiten der parallelgeschalteten Umrichter durch eine Steuerschaltung bestimmt werden, und wobei bei steigendem Strom stets der den grössten Strom und bei sinkendem Strom stets der den kleinsten Strom führende Umrichter geschaltet wird, und wobei der Schaltzeitpunkt jedes zu schaltenden Umrichters ausser dem zuallererst geschalteten in Abhängigkeit eines Referenzzeitpunktes bestimmt wird, in dem der Strom mindestens eines vor ihm geschalteten Umrichters eine vorgegebene Bedingung erfüllt.

2. Verfahren nach Anspruch 1, dadurch gekennzeichnet, dass der Referenzzeitpunkt derjenige ist, in dem der Strom des als erster geschaltete Umrichter eine vorgegebene Bedingung erfüllt.

3. Verfahren nach Anspruch 1, dadurch gekennzeichnet, dass der Referenzzeitpunkt derjenige ist, in dem der Strom des zuletzt geschalteten Umrichters eine vorgegebene Bedingung erfüllt.

4. Verfahren nach einem der vorangehenden Ansprüche, dadurch gekennzeichnet, dass der Referenzzeitpunkt derjenige ist, in dem der Strom von besagtem, vorher geschalteten Umrichter seinen Extremwert einnimmt.

5. Verfahren nach Anspruch 4, dadurch gekennzeichnet, dass der Schaltzeitpunkt jedes nicht als erster geschalteter Umrichters gegenüber dem Referenzzeitpunkt um ein Zeitintervall verzögert wird, der eine Funktion der im Referenzzeitpunkt bestehenden Differenz zwischen dem Strom des vorher geschalteten und demjenigen des zu schaltenden Umrichters ist.

6. Verfahren nach Anspruch 5, dadurch gekennzeichnet, dass die Funktion eine lineare Funktion der StromDifferenz ist.

7. Verfahren nach Anspruch 2 und Anspruch 3, dadurch gekennzeichnet, dass der Referenzzeitpunkt derjenige ist, in dem der Strom des zu schaltenden Umrichters zum Extremwert aller Umrichterströme wird.

8. Verfahren nach Anspruch 7, dadurch gekennzeichnet, dass der Schaltzeitpunkt gleich dem Referenzzeitpunkt ist.

## Claims

1. Method for the parallel connection of inverters, in particular of inverters with pulse modulation, the outputs of which are connected directly or by way of chokes, wherein the times of switching-on and switching-off of the parallelly connected inverters are determined by a control circuit, and wherein when the current is rising, always that inverter is switched which carries the greatest current and when the current is falling, always that inverter is switched which carries the least current, and wherein the instant of switching of each inverter to be switched, apart from that switched first of all, is determined in dependence on a reference instant at which the current of at least one inverter switched before it fulfils a preset condition.

2. Method according to claim 1, characterised in that the reference instant is that at which the current of the inverter switched first fulfils a preset condition.

3. Method according to claim 1, characterised in that the reference instant is that at which the current of the inverter switched last fulfils a preset condition.

4. Method according to one of the preceding claims, characterised in that the reference instant is that at which the current of the said previously switched inverter assumes its extreme value.

5. Method according to claim 4, characterised in that the instant of switching of each inverter not switched first is delayed relative to the reference instant by a time interval which is a function of the difference existing in the reference instant between the current of the inverter switched previously and that of the inverter to be switched.

6. Method according to claim 5, characterised in that the function is a linear function of the difference in current.

7. Method according to claim 2 and claim 3, characterised in that the reference instant is that at which the current of the inverter to be switched becomes the extreme value of all inverter currents.

8. Method according to claim 7, characterised in that the instant of switching is equal to the reference instant.

## Revendications

1. Procédé pour le montage en parallèle de convertisseurs de fréquence, en particulier de convertisseurs de fréquence à modulation d'impulsions, dont les sorties sont reliées directement ou par l'intermédiaire de bobines de choc, selon lequel les moments de mise en marche et d'arrêt des convertisseurs de fréquence montés en parallèle sont définis par un circuit de commande ; avec un courant ascendant, c'est toujours le convertisseur amenant le courant maximum qui est commuté tandis qu'avec un courant descendant, c'est toujours le convertisseur amenant le courant minimum qui est commuté ; et le moment de commutation de chaque convertisseur à commuter, sauf pour celui qui a été commuté en premier, est défini en fonction d'un moment de référence, le courant d'au moins un convertisseur commuté avant lui remplissant une condition prédéfinie.

2. Procédé selon la revendication 1, caractérisé en ce que le moment de référence est le moment où le courant du convertisseur commuté en premier remplit une condition prédéfinie.

3. Procédé selon la revendication 1, caractérisé en ce que le moment de référence est le moment où le courant du convertisseur commuté en dernier remplit une condition prédéfinie.

4. Procédé selon l'une des revendications précédentes, caractérisé en ce que le moment de référence est le moment où le courant dudit convertisseur commuté précédemment adopte sa valeur extrême.

5. Procédé selon la revendication 4, caractérisé en ce que le moment de commutation de chaque convertisseur non commuté en premier est retardé par rapport au moment de référence suivant un intervalle de temps qui est fonction de la différence, au moment de référence, entre le courant du convertisseur commuté précédemment et le courant du convertisseur à commuter.

6. Procédé selon la revendication 5, caractérisé en ce que la fonction est une fonction linéaire de la différence de courant.

7. Procédé selon les revendications 2 et 3, caractérisé en ce que le moment de référence est le moment où le courant du convertisseur à commuter devient la valeur extrême de tous les courants de convertisseurs.

8. Procédé selon la revendication 7, caractérisé en ce que le moment de commutation est égal au moment

de référence.

Fig. 1

Fig. 2

# Fig. 3

# Fig. 4

Fig. 5